# EUROPEAN PATENT APPLICATION

(11) **EP 4 818 274 A1**
(43) Date of publication of application: **07.10.2026**
(21) Application number: 26168707.3
(22) Date of filing: 27.03.2026
(51) Int. Cl.: C09D 11/102, C09D 11/12, C09D 11/38, C09D 11/40, C09D 11/54, C09D 11/322, D06P 5/30

(54) **AQUEOUS INK FOR INKJET RECORDING, INK SET, INKJET RECORDING DEVICE, AND IMAGE FORMING METHOD**

(30) Priority: 31.03.2025 JP 2025059522; 06.03.2026 JP 2026035990
(71) Applicant: BROTHER KOGYO KABUSHIKI KAISHA, Aichi-ken 467-8561 (JP)
(72) Inventor: NISHIKAWA, Aoi, Nagoya, 467-8562 (JP); TAGA, Yasuhiro, Nagoya, 467-8562 (JP); ITO, Shinpei, Nagoya, 467-8562 (JP); HIGUCHI, Takayuki, Nagoya, 467-8562 (JP); KAWAKAMI, Takefumi, Nagoya, 467-8562 (JP); MIYAGAWA, Nanako, Nagoya, 467-8562 (JP); ISAKA, Yuta, Nagoya, 467-8562 (JP); OTANI, Hana, Nagoya, 467-8562 (JP)
(74) Representative: Kuhnen & Wacker Patent- und Rechtsanwaltsbüro PartG mbB

(57) **Abstract**

An aqueous ink for inkjet recording for forming an image on a fabric, includes a pigment, a binder, a crosslinking agent, and wax particles. The binder includes a urethane resin. The crosslinking agent includes a carbodiimide group-containing compound. The wax particles are anionic. A ratio of an amount of the crosslinking agent to an amount of the wax particles is 0.50 or greater and 3.00 or less.

## Description

### TECHNICAL FIELD

The present specification discloses a technology relating to aqueous ink for inkjet recording, an ink set, an inkjet recording apparatus, and an image forming method. In particular, the present specification discloses a technology concerning aqueous inks suitable for fabric printing on a fabric.

### BACKGROUND

Patent Literature 1 discloses an aqueous ink for inkjet recording used for fabric printing. This aqueous ink includes a pigment, a water-dispersible resin, and a crosslinking agent.

### PATENT LITERATURE

Patent Literature 1: JP2019-031611A

### SUMMARY

In image formation using aqueous inks containing pigments, the pigments tend to remain on the surface of a fabric, resulting in poor wash fastness and rubbing fastness. In general, it is known that aqueous inks containing pigments exhibit lower color development than aqueous inks containing dyes. Technologies have been developed to improve wash fastness and rubbing fastness by using a combination of a binder and a crosslinking agent. However, it remains difficult to achieve satisfactory levels of color development, wash fastness, and rubbing fastness with pigment-based aqueous inks. Furthermore, further improvements are requested in terms of the storage stability of aqueous inks. The present specification provides a technology for achieving excellent color development, high wash fastness and rubbing fastness, and favorable storage stability.

The aqueous ink for inkjet recording disclosed herein is used to form images on a fabric. The aqueous ink includes a pigment, a binder, a crosslinking agent, and a wax particle. The binder includes a urethane resin. The crosslinking agent includes a carbodiimide group-containing compound. The wax particle is anionic. A ratio of an amount of the crosslinking agent to an amount of the wax particle is 0.50 or greater and 3.00 or less.

Prior to image formation using an aqueous ink for inkjet recording, a pretreatment liquid may be applied to a fabric. Since the pretreatment liquid generally includes a cationic component, a surface of the pretreated fabric becomes positively charged. The wax particles included in the above-mentioned aqueous ink are anionic. Accordingly, when the aqueous ink containing the wax particles is applied to the surface of the pretreated fabric, electrostatic interactions occur among the wax particles due to positive charges, and the wax particles may aggregate. The aggregated wax particles remain on the surface of the fabric, thereby suppressing penetration of the pigment in a thickness direction of the fabric and allowing the pigment to remain on the surface of the fabric. As a result, the color development of the aqueous ink can be enhanced. In addition, in the above-mentioned aqueous ink, a crosslinking agent including a carbodiimide group-containing compound effectively crosslinks binders including a urethane resin, thereby forming a robust resin coating film. This resin coating film may keep the pigment to the fabric, causing good wash fastness. Furthermore, since some of the wax particles present in the resin coating film spread to cover a surface of the resin coating film, the rubbing fastness of the resin coating film can be improved. As a result of extensive studies, the inventors have found that adjusting a ratio of an amount of the crosslinking agent to an amount of the wax particle to 0.50 or greater and 3.00 or less may achieve excellent color development, high wash fastness and rubbing fastness, and favorable storage stability through the above-described mechanisms.

The ink set is also novel and useful. This ink set comprises the aforementioned aqueous ink for inkjet recording and a cationic pretreatment liquid. The cationic pretreatment liquid is applied to a fabric before forming an image on the fabric using the aqueous ink for inkjet recording.

An inkjet recording apparatus is also novel and useful. The inkjet recording apparatus includes an ink storage section, an ink ejection section, and the aqueous ink for inkjet recording stored in the ink storage section. The inkjet recording apparatus ejects the aqueous ink for inkjet recording from the ink ejection section to form an image on the fabric. The aqueous ink includes a pigment, a binder, a crosslinking agent, and a wax particle. The binder includes a urethane resin. The crosslinking agent includes a carbodiimide group-containing compound. The wax particle is anionic. A ratio of an amount of the crosslinking agent to an amount of the wax particle is 0.50 or greater and 3.00 or less.

An image forming method for forming an image on a fabric by an inkjet recording method is also novel and useful. The image forming method includes a pretreatment step, an image forming step, and a drying step. In the pretreatment step, a cationic pretreatment liquid is applied to the fabric. The pretreatment liquid is applied within an area where an image is to be formed using the aqueous ink. In the image forming step, an image is formed on the pretreated fabric using the aqueous ink. In the drying step, the fabric having the formed image is heated to dry the aqueous ink. The aqueous ink includes a pigment, a binder, a crosslinking agent, and a wax particle. The binder includes a urethane resin. The crosslinking agent includes a carbodiimide group-containing compound. The wax particle is anionic. A ratio of an amount of the crosslinking agent to an amount of the wax particle is 0.50 or greater and 3.00 or less.

### BRIEF DESCRIPTION OF DRAWINGS

FIG. 1 illustrates a configuration of an inkjet recording apparatus.
FIG. 2 illustrates a schematic configuration of an ejection head mounted on a carriage.
FIG. 3 illustrates an example of a configuration in which a pretreatment liquid is applied prior to image formation by the inkjet recording apparatus.
FIG. 4 illustrates TABLE 1 of the present specification.
FIG. 5 illustrates TABLE 2 of the present specification.
FIG. 6 illustrates TABLE 3 of the present specification.

### DETAIL DESCRIPTION

(Aqueous Ink for Inkjet Recording) An embodiment of aqueous ink for inkjet recording disclosed in this specification will be described. Hereinafter, the aqueous ink for inkjet recording may simply be referred to as aqueous ink. The aqueous ink is used to form an image on a fabric. Examples of the fabric may include those made of fiber materials, such as woven fabrics, non-woven fabrics, and knitted fabrics. Examples of the fiber materials may include natural fibers and synthetic fibers. Examples of natural fibers may include cotton, linen, wool, and silk. Examples of synthetic fibers include rayon, vinylon, nylon, acrylic, polyurethane, polyester, and acetate. The fabric may also be a blended woven fabric or blended non-woven fabric made from two or more selected from the above-mentioned fiber materials. The aqueous ink includes a pigment, a binder, a crosslinking agent, and a wax particle.

The pigment is not particularly limited. Examples of the pigment may include carbon black, inorganic pigments, and organic pigments. Examples of carbon black may include furnace black, lamp black, acetylene black, and channel black. Examples of inorganic pigments may include titanium oxide, iron oxide-based inorganic pigments, and carbon black-based inorganic pigments. Examples of organic pigments may include azo pigments such as azo lakes, insoluble azo pigments, condensed azo pigments, and chelate azo pigments; polycyclic pigments such as phthalocyanine pigments, perylene and perinone pigments, anthraquinone pigments, quinacridone pigments, dioxazine pigments, thioindigo pigments, isoindolinone pigments, and quinophthalone pigments; dye lake pigments such as basic dye-type lake pigments and acid dye-type lake pigments; nitro pigments; nitroso pigments; aniline black daylight fluorescent pigments. Other pigments may also be used as long as they are dispersible in an aqueous phase. Specific examples of these pigments may include C.I. Pigment Black 1, 6, and 7; C.I. Pigment Yellow 1, 2, 3, 12, 13, 14, 15, 16, 17, 55, 74, 78, 150, 151, 154, 155, 180, 185, and 194; C.I. Pigment Orange 31 and 43; C.I. Pigment Red 2, 3, 5, 6, 7, 12, 15, 16, 48, 48:1, 53:1, 57, 57:1, 112, 122, 123, 139, 144, 146, 149, 150, 166, 168, 175, 176, 177, 178, 184, 185, 190, 202, 209, 221, 222, 224, and 238; C.I. Pigment Violet 19 and 196; C.I. Pigment Blue 1, 2, 3, 15, 15:1, 15:2, 15:3, 15:4, 16, 22, and 60; C.I. Pigment Green 7 and 36; and solid solutions of these pigments. The aqueous ink may include a pigment dispersed in water using a dispersant. Examples of the dispersant may include general polymer dispersants, which may be prepared in-house. Examples of the polymer dispersants may include pigment-dispersing resins and resin dispersants. In the aqueous ink, the pigment may also be encapsulated by a polymer.

Examples of a method for dispersing a pigment using a pigment-dispersing resin may include dispersing the pigment with a dispersing device. The dispersing device used for pigment dispersion is not particularly limited. Examples of the dispersing device may include general dispersing device such as a ball mill, a roll mill, and a sand mill.

The pigment may be a self-dispersing pigment. The self-dispersing pigment may be one that can be dispersed in water without using a dispersant, as hydrophilic functional groups such as carbonyl groups, hydroxyl groups, carboxylic acid groups, sulfonic acid groups, phosphate groups, and at least one of their salts are introduced into the pigment particles either directly or via another group through chemical bonding.

The pigment may be used alone or in combination with two or more types. Pigment solid amount, i.e., the solid amount of the pigment relative to the total amount of the aqueous ink, is not particularly limited and can be determined as appropriate based on the desired optical density or chroma. The range of the pigment solid amount may be 0.10 wt% or greater and 20.00 wt% or less, 0.50 wt% or greater and 15.00 wt% or less, 1.00 wt% or greater and 10.00 wt% or less, or 2.00 wt% or greater and 8.00 wt% or less. The pigment solid amount refers to the weight of the pigment only and does not include the weight of resin dispersants and other components. In other words, the pigment solid amount is calculated based on the effective ingredient amount.

(Binder) The binder is blended to improve the fixation of the pigment on the fabric and the rubbing fastness, by forming a resin coating film on the fabric. The binder may be blended in the form of an emulsion in the aqueous ink and may be dispersed in the form of resin particles in the aqueous ink. The binder includes a urethane resin. The urethane resin may be anionic, nonionic, or cationic.

A urethane resin is a resin having urethane bonds in its molecular structure. The urethane bonds may be present in the main chain or in the side chains. Examples of urethane resins may include polyester-based polyurethane resins, polyether-based polyurethane resins, polyether-ester-based polyurethane resins, and polycarbonate-based polyurethane resins. The polyurethane resin may be obtained by reacting a polyisocyanate component with one or more polyol components selected from polyester-based, polylactone-based, polycarbonate-based, and polyether-polycarbonate-based polyols, optionally along with a chain extender and a chain terminator, in the presence of a urethanization catalyst, using a known method.

The polyisocyanate is a compound or derivative having two or more isocyanate groups. Examples of polyisocyanates may include diisocyanates and triisocyanates. The polyisocyanate may be one or more selected from aliphatic polyisocyanates, cycloaliphatic polyisocyanates, aromatic polyisocyanates, aromatic-aliphatic polyisocyanates, and aromatic-cycloaliphatic polyisocyanates. The polyisocyanate may have isocyanate groups protected with blocking agents. Examples of polyisocyanate derivatives may include polymeric products and modified products such as adducts, carbodiimide-modified products, allophanate-modified products, uretdione-modified products, isocyanurate-modified products, biuret-modified products, uretonimine-modified products, dimers, trimers, pentamers, and heptamers.

Examples of polyols may include aromatic polyols, aliphatic polyols, and cycloalipatic polyols. The polyol may be either a saturated or unsaturated polyol. The polyol only needs to have two or more hydroxyl groups, and examples may include diols and triols.

Commercially available products may be used as the urethane resin. Examples of such commercial products may include TAKELAC^{®} W-5030, TAKELAC W-5130, TAKELAC W-5661, TAKELAC W-6010, TAKELAC W-6020, TAKELAC W-6061, TAKELAC W-6110, and TAKELAC W-6021 from Mitsui Chemicals, Inc.; SUPERFLEX^{®} 126, SUPERFLEX 150, SUPERFLEX 150HS, SUPERFLEX 170, SUPERFLEX 210, SUPERFLEX 300, SUPERFLEX 500M, SUPERFLEX 620, SUPERFLEX 740, SUPERFLEX 820, SUPERFLEX 830HS, SUPERFLEX 860, and SUPERFLEX E-2000 from by DKS Co. Ltd.; Impranil^{®} DLP-R, Impranil DLN-W50, and Impranil DLP1380 from Sumika Covestro Urethane Company, Ltd. These binders may be used alone or in combination of two or more.

An amount of the binder in the total amount of the aqueous ink is not particularly limited. The lower limit of the binder amount, on a solids basis, may be 1.00 wt% or greater, 2.00 wt% or greater, 3.00 wt% or greater, 3.50 wt% or greater, or 4.00 wt% or greater. The upper limit of the binder amount, on a solids basis, may be 15.00 wt% or less, 10.00 wt% or less, 9.00 wt% or less, 8.00 wt% or less, or 7.00 wt% or less. A range of the binder amount may be set by appropriately combining the above lower and upper limits. For example, a range of the binder amount may be 1.00 wt% or greater and 15.00 wt% or less, 2.00 wt% or greater and 10.00 wt% or less, 3.00 wt% or greater and 9.00 wt% or less, 3.50 wt% or greater and 8.00 wt% or less, or 4.00 wt% or greater and 7.00 wt% or less, on a solids basis. When the binder amount falls within the above range, the pigment can be suitably fixed to the fabric, and a resin coating film with high rubbing fastness can be ensured.

The aqueous ink may contain, as a binder, in addition to a urethane resin, other water-dispersible resins. Examples of water-dispersible resins may include acrylic resins, polycarbonate resins, styrene-based resins, and polyester resins.

The crosslinking agent is incorporated to impart crosslinking properties to the binder. The crosslinking agent includes a carbodiimide group-containing compound.

As the carbodiimide group-containing compound, a compound containing two or more carbodiimide groups within its molecular structure may be preferred. Such carbodiimide group-containing compounds may effectively crosslink the binder containing the aforementioned acrylic resin, thereby forming a sufficient resin coating film. Consequently, high wash fastness can be achieved.

Examples of carbodiimide group-containing compounds may include carbodiimides, N,N'-dimethylcarbodiimide, N-ethyl-N'-isopropylcarbodiimide, N,N'-diisopropylcarbodiimide, N,N'-dicyclohexylcarbodiimide, N,N'-diphenylcarbodiimide, N,N'-diacetylcarbodiimide, N,N'-bis(2-propenyl)carbodiimide, N,N'-dipyrrolidylcarbodiimide, N,N'-diethoxycarbodiimide, bis(trimethylsilyl)carbodiimide, 1-cyclohexyl-3-(2-morpholinoethyl)carbodiimide metho-p-toluenesulfonate, 1-ethyl-3-(3-dimethylaminopropyl)carbodiimide hydrochloride, calcium cyanamide, and carbodiimide group-containing polymers.

Examples of carbodiimide group-containing polymers may include aromatic polycarbodiimides such as poly(4,4'-diphenylmethane carbodiimide), poly(p-phenylene carbodiimide), poly(m-phenylene carbodiimide), poly(diisopropylphenyl carbodiimide), and poly(triisopropylphenyl carbodiimide); cycloaliphatic polycarbodiimides such as poly(dicyclohexylmethane carbodiimide); and aliphatic polycarbodiimides such as poly(diisopropyl carbodiimide).

Commercially available carbodiimide group-containing compounds may be used. Examples of such commercial products may include CALBODILITE^{™} V-02, CALBODILITE SV-02, CALBODILITE V-04, CALBODILITE V-10, CALBODILITE E-02, and CALBODILITE E-05, from Nisshinbo Chemical Inc.

From the perspective of effectively crosslinking binders containing urethane resins, carbodiimide group-containing compounds having a particular carbodiimide equivalent (NCN equivalent) may be preferably used. The NCN equivalent refers to the molecular weight per carbodiimide group in the carbodiimide group-containing compound. The NCN equivalent is not particularly limited, The NCN equivalent may be 150 or greater and 500 or less, 200 or greater and 450 or less, 250 or greater and 400 or less, or 300 or greater and 350 or less. A smaller NCN equivalent indicates a higher number of crosslinking points, whereas a larger NCN equivalent indicates fewer crosslinking points. If the NCN equivalent is too small, an excessive crosslinked structure may be formed between binders. When more crosslinked structures than necessary are formed, the resin coating film may be constrained by the crosslinked structure. As a result, a brittle resin coating film may be formed in which stress applied by friction is difficult to disperse. On the other hand, if the NCN equivalent is too large, a sufficient crosslinked structure may not be formed between binders, making it difficult to obtain a robust resin coating film. Therefore, when the NCN equivalent falls within the above range, an appropriately crosslinked resin coating film can be obtained, thereby achieving higher rubbing fastness.

Among the aforementioned crosslinking agents, those in the form of an emulsion may be preferred. Emulsion-type crosslinking agents tend to remain on the surface of the fabric due to aggregation, thereby facilitating the retention of pigment on the surface of the fabric and improving the color development of aqueous inks.

The aforementioned crosslinking agents may be used alone or in combination with two or more types. From the above perspective, among the aforementioned commercial products, CALBODILITE E-05 may be preferred.

An amount of the crosslinking agent may be appropriately adjusted in accordance with an amount of wax particles described later. The lower limit of a ratio of the crosslinking agent amount to the wax particle amount, on a solids basis, may be 0.50 or greater, and may be, for example, 0.60 or greater, 0.80 or greater, 1.00 or greater, or 1.20 or greater. The upper limit of the ratio may be 3.00 or less, and may be, for example, 2.80 or less, 2.60 or less, 2.40 or less, or 2.20 or less. A range of the ratio may be set by appropriately combining the above-mentioned lower and upper limits. For example, the range of the ratio may be 0.50 or greater and 3.00 or less, 0.60 or greater and 2.80 or less, 0.80 or greater and 2.60 or less, 1.00 or greater and 2.40 or less, or 1.20 or greater and 2.20 or less, on a solids basis. When the ratio falls within the above range, favorable color development of aqueous ink, high rubbing fastness, and good storage stability can be achieved.

In addition, an amount of the crosslinking agent may be appropriately adjusted in accordance with the total solid amount of the binder, the crosslinking agent, and the wax particles described later. The ratio of the crosslinking agent amount to the total solid amount is not particularly limited. The lower limit of the ratio, on a solids basis, may be, for example, 0.05 or greater, 0.07 or greater, 0.08 or greater, or 0.10 or greater. The upper limit of the ratio may be, for example, 0.50 or less, 0.30 or less, 0.26 or less, or 0.22 or less. The range of the ratio may be set by appropriately combining the above-mentioned lower and upper limits. For example, the range of the ratio may be 0.05 or greater and 0.50 or less, 0.07 or greater and 0.30 or less, 0.08 or greater and 0.26 or less, or 0.10 or greater and 0.22 or less, on a solids basis. When the ratio falls within the above range, the binder can be sufficiently crosslinked, and a robust resin coating film can be formed, thereby improving rubbing fastness.

The crosslinking agent amount relative to the total amount of the aqueous ink is not particularly limited. The lower limit of the crosslinking agent amount, on a solids basis, may be, 0.10 wt% or greater, 0.30 wt% or greater, 0.50 wt% or greater, 0.60 wt% or greater, or 0.80 wt% or greater. The upper limit of the crosslinking agent may be, for example, 10.00 wt% or less, 5.00 wt% or less, 3.00 wt% or less, 2.50 wt% or less, or 2.00 wt% or less. The range of the crosslinking agent amount may be set by appropriately combining the above lower and upper limits. The range of the crosslinking agent amount may be, on a solids basis, 0.10 wt% or greater and 10.00 wt% or less, 0.30 wt% or greater and 5.00 wt% or less, 0.50 wt% or greater and 3.00 wt% or less, 0.60 wt% or greater and 2.50 wt% or less, or 0.80 wt% or greater and 2.00 wt% or less.

The aqueous ink may include, in addition to carbodiimide group-containing compounds, other crosslinking agents. Examples of such other crosslinking agents may include oxazoline group-containing compounds, isocyanate group-containing compounds, aziridine group-containing compounds, and epoxy group-containing compounds.

(Wax Particles) Wax particles are incorporated to enhance the color development of the aqueous ink and to improve the rubbing fastness of the resin coating film. Pretreatment of the fabric with a pretreatment liquid is performed to improve color development. However, even when a pretreatment liquid is used, it may be difficult to achieve sufficient color development with the aqueous ink. As described above, when the fabric is pretreated with a cationic pretreatment liquid, the surface of the fabric is positively charged. The wax particles of this embodiment are anionic. Therefore, when the aqueous ink containing the wax particles is applied to the surface of the pretreated fabric, interactions occur between the wax particles due to the positive charge, which may result in the aggregation of the wax particles. The aggregated wax particles remain on the surface of the fabric, thereby suppressing the penetration of the pigment into the thickness direction of the fabric and allowing the pigment to remain on the surface of the fabric. As a result, the color development of the aqueous ink can be improved. Furthermore, since some of the wax particles present in the resin coating film are distributed so as to cover the surface of the resin coating film, the rubbing fastness of the resin coating film can also be enhanced.

The wax particles contain wax. The wax may be either natural wax or synthetic wax. The wax particles may also contain components other than wax. However, from the perspective of improving rubbing fastness, it may be preferable that an amount of the wax in the wax particles is 80.00 wt% or greater and 100 wt% or less. More preferably, the wax particles may consist entirely of wax.

Examples of natural waxes may include petroleum-based waxes such as paraffin wax and microcrystalline wax; lignite-based waxes such as montan wax; plant-based waxes such as carnauba wax and candelilla wax; and animal-based or plant-based waxes such as beeswax and lanolin. Examples of synthetic waxes may include polyethylene wax, polypropylene wax, oxidized polyethylene wax, polyalkylene wax, oxidized polyalkylene wax, and silicone wax. Among these, synthetic wax may be preferred, and polyethylene wax, oxidized polyethylene wax and paraffin wax may be particularly preferred. The wax particles may be in the form of a wax emulsion. A wax emulsion typically consists of wax particles and a dispersion medium, wherein the wax particles are dispersed with a specific particle size rather than being dissolved in the dispersion medium.

Commercially available waxes may be used. Examples may include CERAFLOUR^{®} 925, CERAFLOUR 929, CERAFLOUR 950, CERAFLOUR 991, AQUACER^{®} 507, AQUACER 526, AQUACER 537, AQUACER 1547, AQUAMAT^{®} 208, AQUAMAT 263, and AQUAMAT 272 from BYK-Chemie; CHEMIPEARL^{®} W100, CHEMIPEARL W200, CHEMIPEARL W300, CHEMIPEARL W400, CHEMIPEARL W500, CHEMIPEARL W700, CHEMIPEARL W800, and CHEMIPEARL W900 from Mitsui Chemicals, Inc.; and HITECH E-7100S, HITECH E-8237, HITECH E-6314, HITECH E-6700, and HITECH E-8010 from Toho Chemical Industry Co., Ltd. Among these, oxidized high-density polyethylene wax and paraffin wax may be preferred. Specific examples may include AQUACER 1547 and AQUACER 537.

The melting point (mp) of the wax particles is not particularly limited. The melting point of the wax particles may be at a temperature that allows the wax particles to melt adequately during heat-drying process after the aqueous ink applied to the fabric. The range of the melting point may be 70 °C or higher and 160 °C or lower, 90 °C or higher and 150 °C or lower, or 100 °C or higher and 140 °C or lower.

The wax particles may be used alone or in combination of two or more types. An amount of the wax particles may be appropriately adjusted based on the amount of the above-described binder. The ratio of the wax particle amount to the binder amount is not particularly limited. The lower limit of the ratio, on a solids basis, may be 0.05 or greater, 0.06 or greater, 0.08 or greater, 0.10 or greater, or 0.12 or greater. The upper limit of the ratio may be 1.00 or less, 0.80 or less, 0.60 or less, 0.50 or less, or 0.40 or less. The range of the ratio may be set by appropriately combining the above lower and upper limits. For example, the range of the ratio, on a solids basis, may be 0.05 or greater and 1.00 or less, 0.06 or greater and 0.80 or less, 0.08 or greater and 0.60 or less, 0.10 or greater and 0.50 or less, or 0.12 or greater and 0.40 or less. When the ratio falls within the above range, the aggregated wax particles can remain on the surface of the fabric, thereby retaining the pigment on the surface and improving the color development of the aqueous ink. In addition, the wax particles and the binder are blended at an appropriate ratio, thereby enabling the aqueous ink to exhibit high wash fastness and high rubbing fastness.

An amount of the wax particles relative to the total amount of the aqueous ink is not particularly limited. The lower limit of the wax particle amount, on a solids basis, may be 0.10 wt% or greater, 0.20 wt% or greater, 0.40 wt% or greater, 0.50 wt% or greater, or 1.00 wt% or greater. The upper limit of the wax particle amount, on a solids basis, may be 5.00 wt% or less, 4.00 wt% or less, 3.00 wt% or less, 2.40 wt% or less, or 2.00 wt% or less. The range of the wax particle amount may be set by appropriately combining the above upper and lower limits. For example, the range of the wax particle amount content, on a solids basis, may be 0.10 wt% or greater and 5.00 wt% or less, 0.20 and 4.00 wt% or less, 0.40 wt% or greater and 3.00 wt% or less, 0.50 wt% or greater and 2.40 wt% or less, or 1.00 wt% or greater and 2.00 wt% or less. When the amount of the wax particle falls within the above range, the wax particles can be distributed so as to cover the surface of the resin coating film. As a result, the resin coating film can be imparted with excellent abrasion resistance, thereby improving rubbing fastness.

(Other Components) The aqueous ink may further include other components such as amine compound, water, water-soluble organic solvents, and surfactants.

The amine compound functions as a pH adjuster in the aqueous ink. The amine compound may be incorporated into the aqueous ink to improve storage stability. The urethane resin forms a crosslinked structure through a reaction between carboxyl groups present in its molecular structure and a carbodiimide group-containing compound. This reaction can proceed at room temperature under acidic to neutral conditions, allowing the urethane resin to be crosslinked by the carbodiimide group-containing compound even during storage of the aqueous ink. Since the amine compound exhibits basicity, including the amine compound in the aqueous ink can raise the pH of the aqueous ink. As a result, the progress of the crosslinking reaction during storage of the aqueous ink can be suppressed. After the aqueous ink is applied to a fabric, the amine compound volatilizes along with the evaporation of water. The volatilization of the amine compound causes a decrease in pH, thereby promoting the crosslinking reaction.

The amine compound is not particularly limited. Examples of the amine compound may include alkylamines and alkanolamines. Examples of alkylamines may include ethylamine, diethylamine, triethylamine, propylamine, dipropylamine, and tripropylamine. Examples of alkanolamines may include ethanolamine, diethanolamine, triethanolamine, propanolamine, dipropanolamine, tripropanolamine, diisopropanolamine, and triisopropanolamine.

From the perspective of volatilizing the amine compound after the aqueous ink is applied to a fabric, an amine compound having a predetermined vapor pressure can be suitably used. The predetermined vapor pressure is not particularly limited, but may be, at 20 °C, 10 mmHg or greater and 100 mmHg or less, 20 mmHg or greater and 80 mmHg or less, 30 mmHg or greater and 70 mmHg or less, or 40 mmHg or greater and 60 mmHg or less.

The amine compound may be used alone or in combination of two or more types. When the aqueous ink contains the amine compound, an amount of the amine compound relative to the total amount of the aqueous ink is not particularly limited. The amount of the amine compound may be 0.01 wt% or greater and 2.00 wt%, or less, 0.05 wt% or greater and 1.00 wt% or less, or 0.10 wt% or greater and 0.50 wt%. or less.

(Water) Water may preferably be ion-exchanged water or purified water. An amount of water relative to the total amount of the aqueous ink may be appropriately determined according to the desired ink properties. The range of the water amount may be 15.00 wt% or greater and 95.00 wt% or less, 35.00 wt% or greater and 85.00 wt% or less, or 50.00 wt% or greater and 80.00 wt% or less. The water amount may also be regarded as the remainder of other components.

(Water-Soluble Organic Solvent) Examples of water-soluble organic solvents may include humectants and penetrants.

The humectant is not particularly limited. Examples of the humectant may include lower alcohols such as methyl alcohol, ethyl alcohol, n-propyl alcohol, isopropyl alcohol, n-butyl alcohol, sec-butyl alcohol, and tert-butyl alcohol; amides such as dimethylformamide and dimethylacetamide; ketones such as acetone; ketoalcohols such as diacetone alcohol; ethers such as tetrahydrofuran and dioxane; polyethers such as polyalkylene glycols; polyhydric alcohols such as alkylene glycols, glycerin, trimethylolpropane, and trimethylolethane; 2-pyrrolidone; N-methyl-2-pyrrolidone; 1,3-dimethyl-2-imidazolidinone; and the like. Examples of polyalkylene glycols may include polyethylene glycol and polypropylene glycol. Examples of alkylene glycols may include ethylene glycol, propylene glycol, butylene glycol, diethylene glycol, triethylene glycol, dipropylene glycol, tripropylene glycol, thioglycol, and hexylene glycol. These humectants may be used alone or in combination of two or more types. Among these, glycerin and polyethylene glycol may be preferred.

The humectant may be used alone or in combination of two or more types. When the aqueous ink contains a humectant, an amount of the humectant relative to the total amount of the aqueous ink is not particularly limited. The range of the humectant amount may be 1.00 wt% or greater and 95.00 wt% or less, 5.00 wt% or greater and 80.00 wt% or less, or 10.00 wt% or greater and 50.00 wt% or less. The humectant amount within the above range may prevent the aqueous ink from drying during storage and improve the storage stability of the aqueous ink.

Examples of penetrants may include glycol ethers. Specific examples of glycol ethers include ethylene glycol methyl ether, ethylene glycol ethyl ether, ethylene glycol-n-propyl ether, diethylene glycol methyl ether, diethylene glycol ethyl ether, diethylene glycol-n-propyl ether, diethylene glycol-n-butyl ether, diethylene glycol-n-hexyl ether, triethylene glycol methyl ether, triethylene glycol ethyl ether, triethylene glycol-n-propyl ether, triethylene glycol-n-butyl ether, propylene glycol methyl ether, propylene glycol ethyl ether, propylene glycol-n-propyl ether, propylene glycol-n-butyl ether, dipropylene glycol methyl ether, dipropylene glycol ethyl ether, dipropylene glycol-n-propyl ether, dipropylene glycol-n-butyl ether, tripropylene glycol methyl ether, tripropylene glycol ethyl ether, tripropylene glycol-n-propyl ether, and tripropylene glycol-n-butyl ether. Among these, triethylene glycol-n-butyl ether may be preferred.

The penetrant may be used alone or in combination of two or more types. When the aqueous ink contains a penetrant, an amount of the penetrant relative to the total amount of the aqueous ink is not particularly limited. The range of the penetrant amount may be 0.10 wt% or greater and 20.00 wt% or less, 0.50 wt% or greater and 10.00 wt% or less, or 1.00 wt% or greater and 5.00 wt% or less.

(Surfactants) The Surfactant is not particularly limited and may be appropriately selected according to the intended purpose. Examples of surfactants may include anionic surfactants, nonionic surfactants, cationic surfactants, amphoteric surfactants, silicone-based surfactants, and fluorine-based surfactants.

Examples of anionic surfactants may include alkylsulfocarboxylate salts, α-olefin sulfonate salts, polyoxyethylene alkyl ether acetate salts, polyoxyethylene alkyl ether sulfate salts, N-acyl amino acids or their salts, N-acylmethyltaurine salts, alkyl sulfate polyoxyalkyl ether sulfate salts, alkyl sulfate polyoxyethylene alkyl ether phosphate salts, rosin soap, castor oil sulfate ester salts, lauryl alcohol sulfate ester salts, alkylphenol-type phosphate esters, alkyl-type phosphate esters, alkylaryl sulfonate salts, diethyl sulfosuccinate salts, diethylhexyl sulfosuccinate salts, and dioctyl sulfosuccinate salts.

Examples of nonionic surfactants may include polyols, glycol ethers, polyoxyethylene alkyl ethers, polyoxyethylene alkyl esters, polyoxyethylene sorbitan fatty acid esters, polyoxyethylene alkylphenyl ethers, polyoxyethylene alkylamines, polyoxyethylene alkylamides, and acetylene glycols. Commercially available nonionic surfactants may be used. Examples of commercially available products may include OLFINE^{®} E1004, OLFINE E1008, and OLFINE E1010 from Nisshin Chemical Industries Co., Ltd.; SURFYNOL^{®} 440, SURFYNOL 465, and SURFYNOL 485 from Air Products and Chemicals, Inc.; and Acetylenol^{™} E40 and Acetylenol E100 from Kawaken Fine Chemicals Co., Ltd.

Examples of silicone-based surfactants include polyether-modified siloxanes and polyether-modified polydimethylsiloxanes. Commercially available silicone-based surfactants may be used. Examples may include DYNOL^{™} 960 and DYNOL 980 from Air Products and Chemicals, Inc.; SILFACE^{®} SAG002, SILFACE SAG005, and SILFACE SAG503A from Nisshin Chemical Industries Co., Ltd.; BYK^{®}-345, BYK-347, BYK-348, BYK-349, BYK-3420, BYK-3455, BYK-3456, LP-X23288, LP-X23289, and LP-X23347 from BYK-Chemie; and TEGO^{®} Twin 4000 and TEGO Wet KL245 from Evonik Tego Chemie.

Examples of fluorine-based surfactants may include perfluoroalkyl sulfonic acid compounds, perfluoroalkyl carboxylic acid compounds, perfluoroalkyl phosphate ester compounds, perfluoroalkyl ethylene oxide adducts, and polyoxyalkylene ether polymer compounds having perfluoroalkyl ether groups as side chains.

The surfactant may be used alone or in combination of two or more types. When the aqueous ink contains a surfactant, an amount of the surfactant relative to the total amount of the aqueous ink is not particularly limited. The range of the surfactant amount may be 0.10 wt% or greater and 20.00 wt% or less, 0.15 wt% or greater and 10.00 wt% or less, or 0.20 wt% or greater and 5.00 wt% or less. When the surfactant amount falls within the above range, the aqueous ink may exhibit suitable surface-active properties.

The aqueous ink may further include, as needed, conventionally known additives. Examples of such additives may include pH adjusters except for the amine compound, viscosity modifiers, and preservatives. Examples of viscosity modifiers may include polyvinyl alcohol, cellulose, and water-soluble resins.

The aqueous ink may be prepared by uniformly mixing the pigment, binder, crosslinking agent, wax particles, water, and other optional components using a conventionally known method, and then removing insoluble matter by filtration or similar method.

As described above, the aqueous ink contains solid components derived from various ingredients. The storage stability of the aqueous ink can be improved by properly setting the total amount of solid components of the binder, crosslinking agent and wax particles relative to the total amount of the aqueous ink. The ratio of the total amount of solid components to the total amount of the aqueous ink is not particularly limited. The lower limit of the total amount of solid components relative to the total amount of the aqueous ink may be 5.00 wt% or greater, 5.50 wt% or greater, 6.00 wt% or greater, 6.50 wt% or greater, or 7.00 wt% or greater. The upper limit of the total amount of solid components relative to the total amount of the aqueous ink may be 15.00 wt% or less, 10.00 wt% or less, 9.50 wt% or less, 9.00 wt% or less, or 8.20 wt% or less.

(Ink Set) Next, the ink set disclosed in this specification will be described. The ink set includes the above-described aqueous ink for inkjet recording and a pretreatment liquid.

(Pretreatment Liquid) The pretreatment liquid is applied to the fabric before forming an image using the inkjet recording aqueous ink. The pretreatment liquid may suppress the penetration of the pigment contained in the aqueous ink into the fabric. The pretreatment liquid may be cationic and may include a coagulant.

(Coagulant) The coagulant is incorporated to suppress bleeding of the aqueous ink and to improve pigment fixation and color development by promoting coagulation of components contained in the aqueous ink. Examples of the coagulant may include organic acids, cationic compounds, and polyvalent metal salts.

Examples of organic acids may include monocarboxylic acids, such as formic acid, acetic acid, propionic acid, butyric acid, benzoic acid, glycolic acid, lactic acid, salicylic acid, pyrrolecarboxylic acid, furan carboxylic acid, picolinic acid, nicotinic acid, thiophene carboxylic acid, levulinic acid, and coumaric acid, and their salts; dicarboxylic acids, such as oxalic acid, malonic acid, succinic acid, glutaric acid, adipic acid, maleic acid, fumaric acid, itaconic acid, sebacic acid, phthalic acid, malic acid, and tartaric acid, and their salts or acid salts; tricarboxylic acids, such as citric acid and trimellitic acid, and their salts or acid salts; and tetracarboxylic acids, such as pyromellitic acid, and their salts or acid salts.

Examples of cationic compounds may include cationic resins and cationic surfactants.

Examples of cationic resins may include resins having primary, secondary, or tertiary amine structures, and resins having quaternary ammonium salt structures. Specific examples may include resins having structures such as vinylamine, allylamine, vinylimidazole, vinylpyridine, dimethylaminoethyl methacrylate, ethyleneimine, guanidine, diallyldimethylammonium chloride, and alkylamine-epichlorohydrin condensates.

Examples of cationic surfactants may include quaternary ammonium salts, quaternary ammonium ions, primary, secondary, and tertiary amine salt-type compounds, alkylamine salts, dialkylamine salts, aliphatic amine salts, alkylpyridinium salts, imidazolinium salts, sulfonium salts, phosphonium salts, and onium salts. Specific examples of cationic surfactants other than quaternary ammonium salts and quaternary ammonium ions may include hydrochloride salts or acetate salts, such as laurylamine, coconut amine, and rosin amine; cetylpyridinium chloride, cetylpyridinium bromide, and dihydroxyethyl laurylamine.

Examples of polyvalent metal salts include aluminum chloride, aluminum bromide, aluminum sulfate, aluminum nitrate, aluminum acetate, barium chloride, barium bromide, barium iodide, barium oxide, barium nitrate, barium thiocyanate, calcium chloride, calcium bromide, calcium iodide, calcium nitrite, calcium nitrate, calcium dihydrogen phosphate, calcium thiocyanate, calcium lactate, calcium fumarate, calcium citrate, copper chloride, copper bromide, copper sulfate, copper nitrate, copper acetate, iron chloride, iron bromide, iron iodide, iron sulfate, iron nitrate, iron oxalate, iron lactate, iron fumarate, iron citrate, magnesium chloride, magnesium bromide, magnesium iodide, magnesium sulfate, manganese sulfate, manganese nitrate, manganese dihydrogen phosphate, manganese acetate, manganese salicylate, manganese benzoate, manganese lactate, nickel chloride, nickel bromide, nickel sulfate, nickel nitrate, nickel acetate, tin sulfate, titanium chloride, zinc chloride, zinc bromide, zinc sulfate, zinc nitrate, zinc thiocyanate, and zinc acetate.

The coagulant may be used alone or in combination of two or more types. An amount of the coagulant relative to the total amount of the pretreatment liquid is not particularly limited. The range of the coagulant amount may be 0.50 wt% or greater and 20.00 wt% or less, 1.00 wt% or greater and 20.00 wt% or less, or 1.00 wt% or greater and 15.00 wt% or less.

The pretreatment liquid may further contain additives such as solvents, pH adjusters, and preservatives, as needed.

(Inkjet Recording Apparatus) Next, with reference to the drawings, an embodiment of an inkjet recording apparatus 10 will be described. Hereinafter, the inkjet recording apparatus 10 may be simply referred to as a recording apparatus 10. The recording apparatus 10 ejects the inkjet recording aqueous ink toward a fabric in accordance with an inkjet recording method, thereby forming an image on the fabric. In the present embodiment, the recording apparatus 10 performs fabric printing on the fabric using the inkjet recording method. The recording apparatus 10 is used while being placed on a tabletop. However, in other embodiments, the recording apparatus 10 may be placed on a floor or a rack.

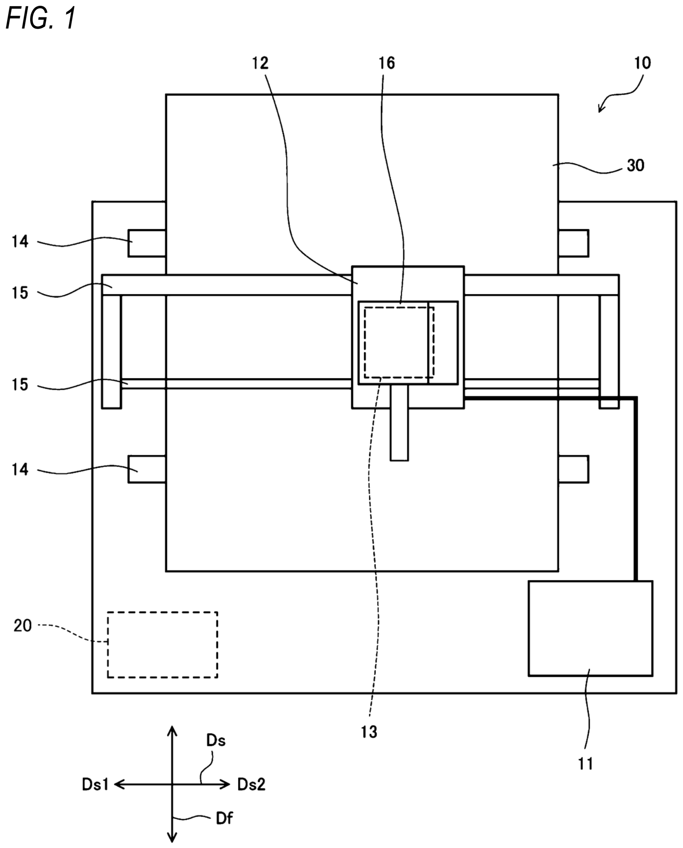

As shown in FIG. 1, the recording apparatus 10 includes a storage tank 11, a carriage 12, an ejection head 13, a pair of transport rollers 14, a pair of guide rails 15, sub-tanks 16, and a control unit 20. The control unit 20 is communicably connected to each component of the recording apparatus 10 and controls their operations. The control unit 20 is also communicably connected to a pretreatment liquid application device 22, which will be described later, and controls its operation. A fabric 30, which is the target for image formation, is placed on a platen of the recording apparatus 10.

The ejection head 13 is mounted on the carriage 12. The carriage 12 is supported by the pair of guide rails 15 and reciprocates along the guide rails 15 in a movement direction Ds. Accordingly, the ejection head 13 reciprocates in the movement direction Ds, which is perpendicular to the transport direction Df of the fabric.

The carriage 12 is equipped with multiple sub-tanks 16. Each sub-tank 16 is connected to a corresponding storage tank 11 via a tube for ink supply. In FIG. 1, the sub-tanks 16 are schematically illustrated as a single structural unit.

The pair of transport rollers 14 are arranged parallel to each other along the movement direction Ds. The transport rollers 14 rotate by driving a transport motor, thereby transporting the fabric 30 placed on the platen in the transport direction Df.

The storage tank 11 stores the aqueous ink. The storage tank 11 is connected to the ejection head 13 via a tube and a sub-tank 16. The storage tank 11 is provided for each type of aqueous ink. Although FIG. 1 schematically illustrates the storage tank 11 as a single structural unit, the recording apparatus 10 may include five storage tanks 11. These five storage tanks respectively store aqueous inks of white, black, yellow, cyan, and magenta colors.

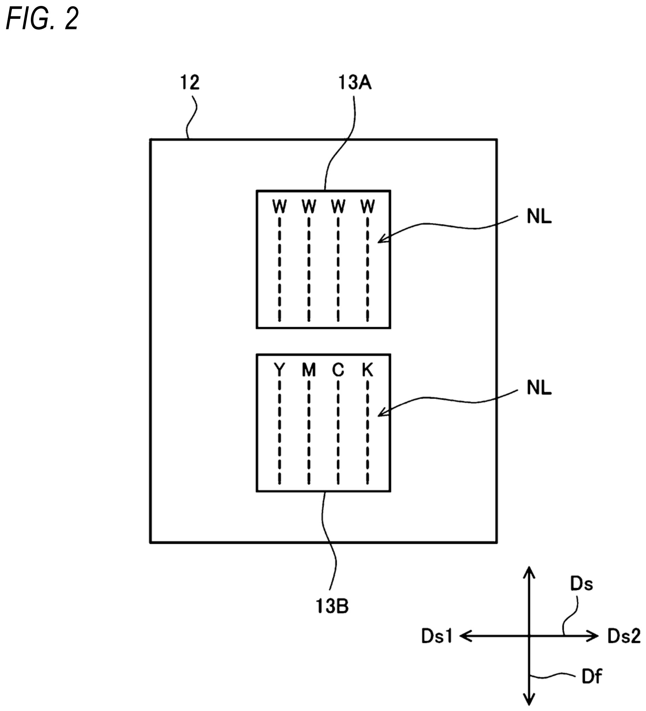

As shown in FIG. 2, the carriage 12 is equipped with two ejection heads 13A, 13B. The ejection heads 13A, 13B are arranged side by side along the transport direction Df. When recording an image on the fabric 30, the carriage 12 moves along the movement direction Ds, causing the ejection heads 13A, 13B to move together with the carriage 12. During this movement, the ejection heads 13A, 13B eject the aqueous ink onto the fabric 30, thereby forming an image on a recording surface of the fabric 30. The image recording process alternates between transporting the fabric 30 in the transport direction Df and ejecting aqueous ink while moving the ejection heads 13A, 13B.

The ejection head 13A ejects white ink. The ejection head 13A includes nozzle arrays NL for ejecting white ink, arranged along the transport direction Df. In the example shown in FIG. 2, the ejection head 13A includes four nozzle arrays NL for white ink, arranged at equal intervals along the movement direction Ds. The number of nozzle arrays NL for white ink is not particularly limited and may be two rows or even a single row.

The ejection head 13B ejects aqueous inks of yellow, magenta, cyan, and black. The ejection head 13B includes nozzle arrays NL for these inks such that each nozzle array is arranged along the transport direction Df. Each nozzle array NL is also arranged at equal intervals along the movement direction Ds.

In addition to the five storage tanks 11 for the above-mentioned ink colors, the recording apparatus 10 may further include an additional storage tank for a special color ink. In such a case, one of the nozzle arrays NL of the ejection head 13A may be used to eject the special color ink.

(Image Formation Method) Next, an image formation method using the inkjet recording method with the recording apparatus 10 will be described. The method includes a pretreatment step, a pretreatment liquid fixation step, an image formation step, and a drying step. The control unit 20 executes each step in response to a command input to the recording apparatus 10 from an external source. Upon receiving the command, the control unit 20 controls components, such as the pair of transport rollers 14, to transport the fabric 30.

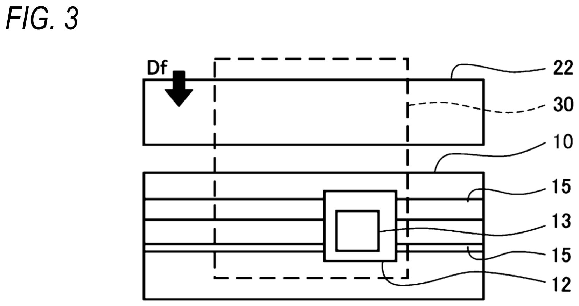

(Pretreatment Step) In the pretreatment step, the control unit 20 applies the pretreatment liquid to the recording surface of the fabric 30. This step is performed to suppress ink bleeding and improve pigment fixation and color development. The specific configuration for applying the pretreatment liquid to the fabric 30 is not particularly limited. For example, as shown in FIG. 3, the pretreatment liquid may be applied using a pretreatment liquid application device 22 that is separate from the recording apparatus 10. The control unit 20 controls the operation of the pretreatment liquid application device 22 to apply the pretreatment liquid to the recording surface of the fabric 30, as the fabric 30 passes through the pretreatment liquid application device 22.

The method of applying the pretreatment liquid to the fabric 30 is not particularly limited. Examples of application method may include spray coating, blade coating, roll coating, inkjet method, and immersion processing. Immersion processing refers to a method in which the fabric 30 is immersed in the pretreatment liquid and then squeezed using a mangle roll. From the viewpoint of continuous processing of pretreatment and image formation, inkjet application may be adopted.

In the pretreatment step, the pretreatment liquid is applied to an area of the fabric 30 where the image will be formed. The pretreatment liquid may be applied to the entire recording surface of the fabric 30 or only to a partial area including the image formation area. In the former case, spray coating, blade coating, roll coating, or immersion processing may be suitably used. In the latter case, inkjet application may be preferably used.

The recording apparatus 10 may also possess the functionality of the pretreatment liquid application device 22. That is, the recording apparatus 10 may be configured to apply the pretreatment liquid to the fabric 30. When the pretreatment liquid is applied by the inkjet method, an additional ejection head for pretreatment liquid may be provided on the carriage 12 of the recording apparatus 10.

(Pretreatment Liquid Fixation Step) In the pretreatment liquid fixation step, the control unit 20 dries the pretreatment liquid applied to the fabric 30, thereby fixing the pretreatment liquid to the recording surface of the fabric 30. The control unit 20 controls a drying device provided in the pretreatment liquid application device 22 to fix the pretreatment liquid to the recording surface of the fabric 30.

The method for drying the pretreatment liquid is not particularly limited. Examples of suitable drying methods may include a method of air drying, and a method of heating using various devices. Examples of commercially available devices for heating may include an iron, a heat press machine, a dryer, an oven, and a belt conveyor oven.

(Image Formation Step) In the image formation step, the control unit 20 ejects aqueous ink onto the recording surface of the transported fabric 30. By controlling the carriage 12 and piezoelectric elements or the like corresponding to each nozzle of the ejection head 13, the control unit 20 selectively ejects aqueous ink from each nozzle toward the fabric 30 passing beneath the ejection head 13. As a result, an image is formed on the recording surface of the fabric 30.

(Drying Step) In the drying step, the control unit 20 heats the fabric 30 to dry the aqueous ink applied thereto. Specifically, the control unit 20 controls a drying device provided in the recording apparatus 10 to dry the aqueous ink adhered to the recording surface of the fabric 30. The drying methods described in the pretreatment liquid fixation step may be used for drying the aqueous ink. In the drying step, the wax particles melt as the fabric 30 is heated. Since a cationic pretreatment liquid is fixed on the surface of the fabric 30, the surface of the fabric 30 carries a positive charge. Due to the positive charge, interactions occur among the melted wax particles, causing the wax particles to aggregate. The aggregated wax particles are less likely to penetrate in the thickness direction of the fabric 30 and therefore remain on the surface of the fabric 30. The wax particles suppress the penetration of the pigment in the thickness direction of the fabric 30, allowing the pigment to remain favorably on the surface of the fabric 30. In addition, when the fabric 30 is heated in the drying step, a crosslinking reaction occurs between binders due to the crosslinking agent, resulting in the formation of a robust resin coating film. Thus, by heating and drying the image-recorded fabric 30, the pigment can be firmly fixed to the fibers of the fabric 30. By performing the above steps, a desired image can be formed on the fabric 30.

The heating temperature of the fabric 30 during the drying step is not particularly limited. The range of the heating temperature may be 80 °C or higher and 200 °C or lower, 100 °C or higher and 190 °C or lower, 110 °C or higher and 185 °C or lower, or 130 °C or higher and 180 °C or lower. It may be preferable to set the heating temperature in consideration of the melting point of the wax particles. In the drying step, the wax particles melt and are partially distributed over the surface of the resin coating film, thereby improving the surface smoothness of the coating film. As a result, it is considered that dry rubbing fastness is enhanced. Therefore, from the perspective of melting the wax particles, it is preferable that the heating temperature be equal to or higher than the melting point of the wax particles. However, in this case, the wax particles are not completely melted; rather, they are melted in such a manner that at least part of their shape remains, thereby further improving dry rubbing fastness. It is considered that, since the particle shape of the wax particles remains to some extent on the surface of the coating film, the wax particles are abraded prior to other components when the surface of the coating film is rubbed. This suppresses the direct application of frictional force to the binder. Therefore, the heating temperature may be set to be equal to or higher than the melting point of the wax particles and equal to or lower than the melting point of the wax particles plus 50 °C, i.e., mp + 50 °C. The time for heating the same position of the fabric 30 during drying is not particularly limited, but may be within a range of 120 seconds to 600 seconds.

In the embodiment described above, the control unit 20 of the recording apparatus 10 controls the operation of the pretreatment liquid application device 22. However, a dedicated control unit for controlling the pretreatment liquid application device 22 may alternatively be included. Further, the pretreatment liquid fixation step may be omitted. That is, the image forming method disclosed in this specification only needs to include at least a pretreatment step, an image forming step, and a drying step.

(Examples) Next, the aqueous ink disclosed in this specification will be described in detail through examples and comparative examples. However, the technology disclosed herein is not limited to these examples in any way. wt%

(Preparation of Aqueous Ink in Example 1) A water-soluble organic solvent, antifungal agent, and water were mixed in a total amount of 88.45 wt%. To this mixture, TAKELAC W-5130 was added as a binder in an amount of 6.00 wt% on a solid content basis, CALBODILITE E-05 was added as a crosslinking agent in an amount of 1.20 wt% on a solid content basis, AQUACER 1547 was added as wax particles in an amount of 1.00 wt% on a solid content basis, BYK-3420 was added as a surfactant in an amount of 0.25 wt%, and triethylamine was added as an amine compound in an amount of 0.10 wt%. Finally, a black pigment dispersion was added as a pigment in an amount of 3.00 wt% on a solid content basis and mixed. The resulting mixture was filtered through a cellulose acetate membrane filter having a pore size of 3.00 µm, from Toyo Roshi Kaisha, Ltd., thereby obtaining the aqueous ink of Example 1.

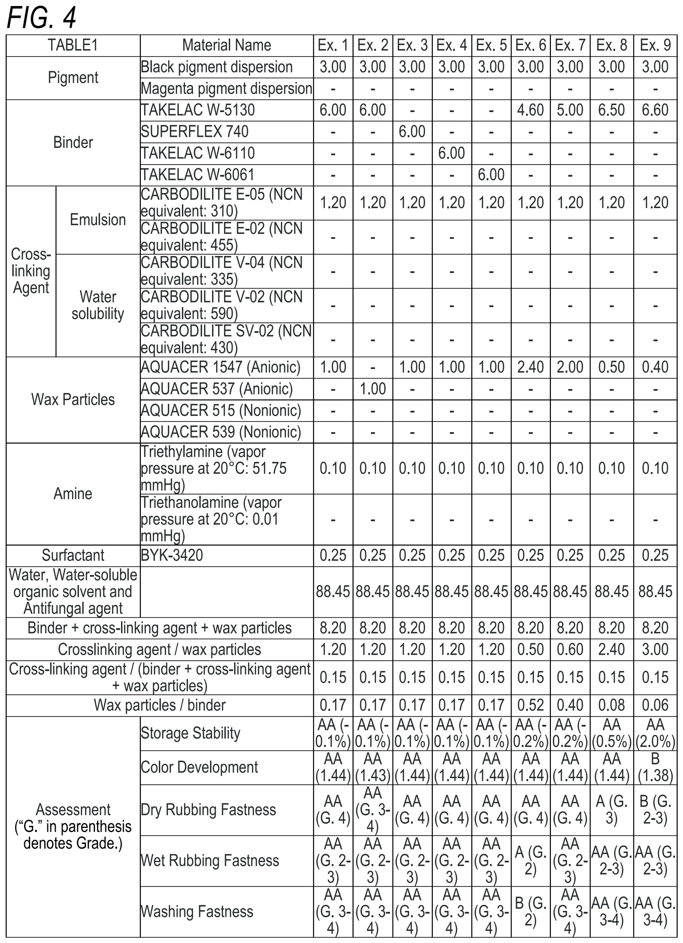

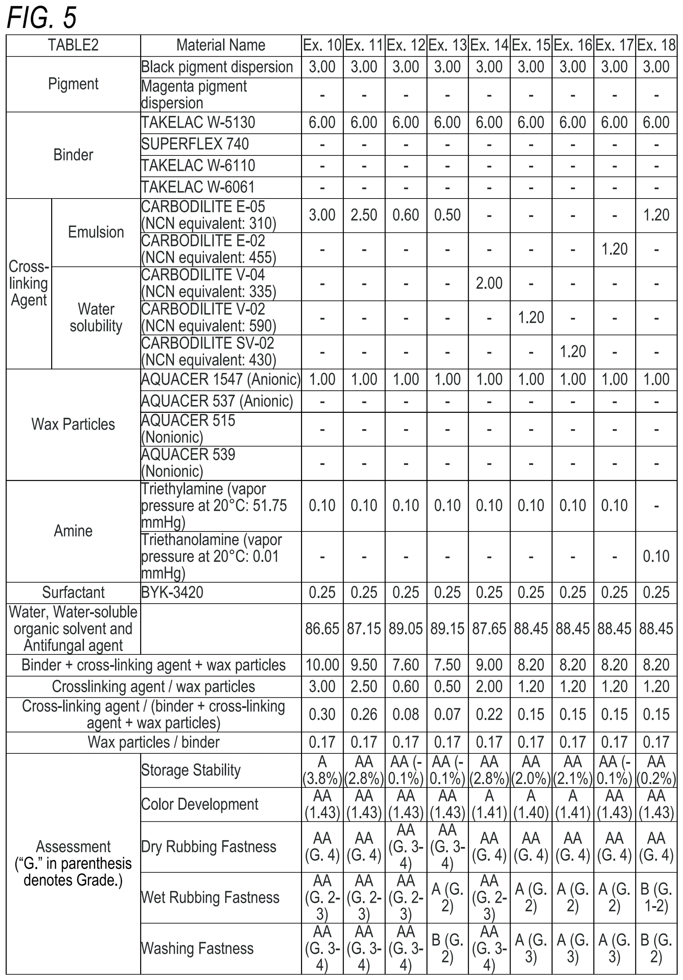

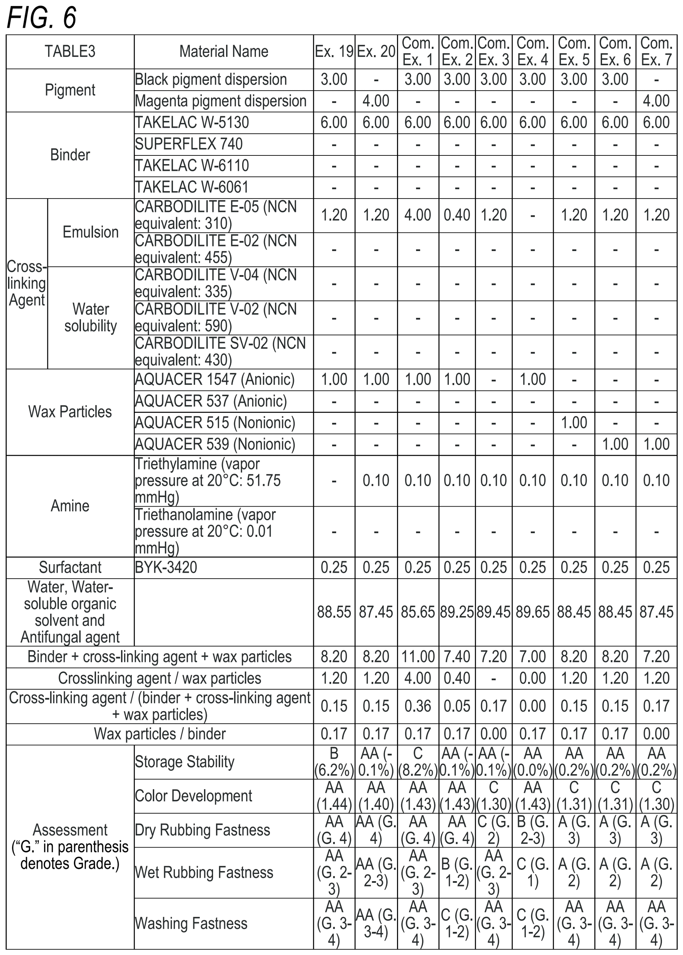

(Preparation of Aqueous Inks in Examples 2 to 20 and Comparative Examples 1 to 7) The aqueous inks in each example and comparative example were prepared using components specified in Tables 1 to 3 shown in FIGs. 4 to 6 and using the same procedure as in Example 1.

In Tables 1 to 3, the black pigment dispersion refers to an aqueous dispersion of carbon black, and the magenta pigment dispersion refers to an aqueous dispersion of C.I. Pigment Red 122. The amount of each component in the respective examples represents an amount of the solid content or active ingredient amount relative to the total amount of the aqueous ink.

(Preparation of Evaluation Samples) As a pretreatment step, a calcium nitrate aqueous solution, diluted to a calcium concentration of 0.30 wt%, was applied as a pretreatment liquid, at a coating amount of 80.00 g/m², to a white woven fabric made of 100 % cotton cut to a piece of 350 mm × 350 mm. The coated fabric was dried in an oven set at 120 °C for 3 minutes to obtain a pretreated fabric. The pretreated fabric was set in garment printer GTX^{®} pro from Brother Industries, Ltd. Using the aqueous inks prepared in each example and comparative example, the ink amount from the inkjet head was adjusted to 20 pL per pixel, and solid printing was performed at a resolution of 1200 dpi × 1200 dpi to form an image on the pretreated fabric. After image formation, the pretreated fabric was heated in an oven set at 160 °C for 5 minutes to obtain an evaluation sample.

Each example and comparative example was evaluated for ink storage stability, color development, dry rubbing fastness, wet rubbing fastness, and wash fastness according to the methods described below.

(Evaluation of Ink Storage Stability) Each aqueous ink prepared in the examples was placed in a sealed container and stored for one week in a thermostatic chamber from ESPEC Corp., set at 60 °C. The viscosity before and after storage was measured at 25 °C using a TVE-25 viscometer from Toki Sangyo Co., Ltd. The rate of change in viscosity after storage, relative to the viscosity before storage, was calculated, and the storage stability of the aqueous ink is evaluated according to the following criteria. The evaluation results are shown in Tables 1 to 3.
AA: Change rate less than 3 %
A: Change rate 3 % or greater and less than 5 %
B: Change rate 5 % or greater and less than 8 %
C: Change rate 8 % or greater

(Evaluation of Color Development of Black Ink) For evaluation samples of Examples 1 to 19 and Comparative Examples 1 to 6, five locations were randomly selected within the image-formed area, and the optical density (OD value) was measured using eXact^{™} spectrophotometer from X-Rite, Incorporated under the following conditions: Light source: D₆₅, Observer angle: 10°, Measurement mode: ANSI-T. The average of the five OD values was determined, and the color development of the aqueous ink was evaluated based on the following criteria. The evaluation results and determined OD values are shown in Tables 1 to 3.
AA: OD value 1.43 or greater
A: OD value 1.39 or greater and less than 1.43
B: OD value 1.33 or greater and less than 1.39
C: OD value less than 1.33

(Evaluation of Color Development of Magenta Ink) For evaluation samples of Example 20 and Comparative Example 7, five locations were randomly selected within the image-formed area, and the optical density (OD value) was measured using eXact^{™} spectrophotometer from X-Rite, Incorporated under the following conditions: Light source: D₆₅, Observer angle: 10°, Measurement mode: ANSI-T. The average of the five OD values was determined, and the color development of the aqueous ink was evaluated based on the following criteria. The evaluation results and determined OD values are shown in Table 3.
AA: OD value 1.40 or greater
A: OD value 1.35 or greater and less than 1.40
B: OD value 1.30 or greater and less than 1.35
C: OD value less than 1.30

(Evaluation of Dry Rubbing fastness) The evaluation samples from each sample were tested for dry rubbing fastness according to ISO 105-X12 standard test method to determine the dry rubbing fastness. The grade of dry rubbing fastness of the aqueous ink was evaluated based on the following criteria. The evaluation results and grades are shown in Tables 1 to 3.
AA: Grade 3 - 4 or higher
A: Grade 3
B: Grade 2 - 3
C: Grade 2 or lower

(Evaluation of Wet Rubbing fastness) The evaluation samples from each sample were tested for wet rubbing fastness according to ISO 105-X12 standard test method to determine the wet rubbing fastness. The grade of wet rubbing fastness of the aqueous ink was evaluated based on the following criteria. The evaluation results and grades are shown in Tables 1 to 3.
AA: Grade 2 - 3 or higher
A: Grade 2
B: Grade 1 - 2
C: Grade 1 or lower

(Wash Fastness) Each evaluation sample, together with a load cloth, was placed in a domestic washing machine AW-304 from Toshiba Corporation. The washing was performed in the standard washing mode with a water volume of 45 L, a weakly alkaline synthetic detergent intended for general household use of 30 g. The above washing procedure was repeated five times. After the five washing cycles, the evaluation samples were compared with the evaluation samples before washing. The degree of color fading was determined using grey scale for assessing change in color, as specified in JIS L0804. Based on the determination results, the grade of wash fastness was determined, and the wash fastness of the aqueous ink was assessed according to the criteria described below. The evaluation results and wash fastness grades are shown in Tables 1 to 3.
AA: Grade 3 - 4 or higher
A: Grade 2 - 3 or higher and less than 3
B: Grade 2
C: Grade 1 - 2 or lower

As shown in Tables 1 to 3, Examples 1 to 20 yielded favorable results in all evaluation items.

In contrast, Comparative Example 1 exhibited particularly poor storage stability compared with Example 1. The aqueous ink of Comparative Example 1 had the same composition as the aqueous ink of Example 1 except for the amount of the crosslinking agent. In other words, in Comparative Example 1, the ratio of the crosslinking agent amount to the wax particles amount was 4.00, which was significantly greater than that in Example 1. In Comparative Example 1, the total amount of binder, crosslinking agent, and wax particles was large, resulting in strong interactions between resin particles. Furthermore, even during storage of the aqueous ink, the crosslinking reaction may slightly proceed. Accordingly, the higher the amount of the crosslinking agent, the greater the number of crosslinking points, which facilitates the progress of the crosslinking reaction and may increase the pH due to consumption of carboxyl groups in the binder. For these reasons, it is considered that the storage stability decreased in Comparative Example 1.

Comparative Example 2 exhibited particularly poor wash fastness compared with Example 1. In Comparative Example 2, the ratio of the amount of the crosslinking agent to the amount of wax particles was 0.40, which was significantly less than that in Example 1. Because the amount of the crosslinking agent was small, a sufficient crosslinked structure could not be formed between binders. In addition, in a resin coating film having few crosslinked structures, ester bonds of the binder undergo hydrolysis, making it impossible to sufficiently fix the pigment to the fabric. For these reasons, it is considered that the wash fastness decreased in Comparative Example 2.

Comparative Example 3 exhibited poor dry rubbing fastness and color development, compared to Example 1. The aqueous ink of Comparative Example 3 had the same composition as the aqueous ink of Example 1 except that it did not contain wax particles. The wax particles AQUACER 1547 contained in the aqueous ink of Example 1 were anionic. The evaluation sample was coated with a calcium nitrate aqueous solution diluted to a calcium concentration of 0.30 wt%. Accordingly, the surface of the evaluation sample was positively charged. Therefore, when the aqueous ink of Example 1 was applied to the evaluation sample, aggregates were formed. This suppressed penetration of the pigment in the thickness direction of the fabric and allowed the pigment to remain on the surface of the fabric, thereby improving the color development of the aqueous ink. In contrast, the aqueous ink of Comparative Example 3 did not contain wax particles. Therefore, when the aqueous ink of Comparative Example 3 was applied to the evaluation sample, aggregates were not formed, and the pigment easily penetrated in the thickness direction of the fabric. As a result, the pigment was less likely to remain near the surface of the fabric, and it is considered that the color development of the aqueous ink was poor. In addition, since wax particles were not on the surface of the resin coating film of the aqueous ink of Comparative Example 3, good abrasion resistance could not be imparted to the resin coating film. Accordingly, Comparative Example 3 exhibited low results in dry rubbing fastness, compared with Example 1.

In Comparative Example 4, wet rubbing fastness, and wash fastness were lower than those in Example 1. The aqueous ink of Comparative Example 4 had the same composition as the aqueous ink of Example 1 except that it did not contain a crosslinking agent. Because the aqueous ink of Comparative Example 4 did not contain a crosslinking agent, no crosslinked structure was formed between binders, and coating strength was not sufficient. Therefore, the evaluation of wet rubbing fastness was low. In addition, because no crosslinked structure was formed between binders, a resin coating film that sufficiently covered the pigment was not obtained. As a result, the fixation of the pigment was impaired, and the evaluation of wash fastness was low.

In Comparative Examples 5 to 7, the color development of the aqueous ink was low. The aqueous inks of Comparative Examples 5 and 6 had the same composition as the aqueous ink of Example 1 except that they contained different wax particles. The aqueous ink of Comparative Example 7 had the same composition as the aqueous ink of Example 20 except that it contained different wax particles. The aqueous inks of Comparative Examples 5 to 7 contained wax particles, and the surface of the resin coating film was covered with wax particles, which provided a certain degree of good rubbing fastness. However, the wax particles contained in the aqueous inks of Comparative Examples 5 to 7 were nonionic. Therefore, when the aqueous inks of Comparative Examples 5 to 7 were applied to the evaluation sample, it was less likely that aggregates were formed, allowing the pigment to easily penetrate in the thickness direction of the fabric. As a result, the pigment was less likely to remain near the surface of the fabric, leading to lower color development of the aqueous inks.

Next, each Example is compared and examined. The aqueous ink of Example 2 has the same composition as the aqueous ink of Example 1 except that it contains different wax particles. The wax particles contained in the aqueous inks of Examples 1 and 2 are both anionic compounds. In Example 2, the results of all evaluations show almost no difference from those of Example 1. It is considered that the technology disclosed in this specification is applicable to aqueous inks containing various wax particles as long as the wax particles are anionic compounds.

The aqueous inks of Examples 3 to 5 have the same composition as the aqueous ink of Example 1 except that they contain different binders. The binder contained in the aqueous ink of Example 1 is a polyester-based polyurethane resin. The binder contained in the aqueous ink of Example 3 is a polyester-based polyurethane resin different from that of Example 1. The binder contained in the aqueous ink of Example 4 is a polycarbonate-based polyurethane resin. The binder contained in the aqueous ink of Example 5 is a polyether-based polyurethane resin. All of these binders are urethane resins. Examples 1 and 3 to 5 show no difference in evaluation results, indicating that aqueous inks containing urethane resins exhibit favorable results in all evaluation items.

The aqueous inks of Examples 6 to 9 have the same composition as the aqueous ink of Example 1 except that the ratio of the amount of wax particles to the amount of the binder differs. As shown in Examples 6 to 9, as the ratio of the amount of wax particles to the amount of the binder decreases, the evaluation of color development may deteriorate. The smaller the ratio, the smaller the relative amount of wax particles. The aqueous ink of Example 9, which has a small ratio, is less likely to allow wax particles to aggregate near the surface of the fabric, making it difficult to obtain the effect of suppressing penetration of the pigment in the thickness direction of the fabric. Therefore, it is found that an aqueous ink containing a certain amount of wax particles exhibits better color development.

Further, as shown in Examples 6 to 9, as the ratio decreases, the evaluation of dry rubbing fastness may deteriorate. Generally, when wax particles are present on the surface of the coating film, the surface lubricity of the coating film improves. Therefore, the smaller the ratio, the more difficult it is to obtain the effect of improving surface lubricity by wax particles. Accordingly, it is found that an aqueous ink containing a certain amount of wax particles exhibits better dry rubbing fastness.

Further, as shown in Examples 6 to 9, as the ratio increases, the evaluation of washing fastness may deteriorate. It is considered that the larger the ratio, the smaller the relative amount of the binder, resulting in an insufficient resin coating film and making it difficult to obtain the effect of sufficiently fixing the pigment to the fabric.

From the above results, it is found that an aqueous ink in which the ratio of the amount of wax particles to the amount of the binder is set within a predetermined range exhibits better color development and higher rubbing fastness and washing fastness.

The aqueous inks of Examples 10 to 13 have the same composition as the aqueous ink of Example 1 except that the amount of the crosslinking agent differs. In other words, in Examples 1 and 10 to 13, the ratio of the amount of the crosslinking agent to the total amount of the binder, the crosslinking agent, and the wax particles differs. As shown in Examples 1 and 10 to 13, as this ratio decreases, washing fastness may deteriorate. On the other hand, as this ratio increases, storage stability may deteriorate. However, even in Example 10, which contains a relatively large amount of the crosslinking agent, and Example 13, which contains a relatively small amount of the crosslinking agent, sufficient effects can be obtained in each evaluation item. Nevertheless, as shown in Examples 1 and 10 to 13, it is found that an aqueous ink in which the ratio of the amount of the crosslinking agent to the total amount of the binder, the crosslinking agent, and the wax particles is set within a predetermined range exhibits better results in each evaluation item.

The aqueous inks of Examples 14 to 16 have the same composition as the aqueous ink of Example 1 except that they contain different crosslinking agents. The crosslinking agent contained in the aqueous ink of Example 1 is in a form of emulsion, whereas the crosslinking agents contained in the aqueous inks of Examples 14 to 16 are water-soluble. When an emulsion-type crosslinking agent is used, the crosslinking agent tends to remain on the surface of the fabric due to aggregation, making it easier for the pigment to remain on the surface of the fabric. Therefore, the aqueous ink of Example 1 exhibits higher color development than the aqueous inks of Examples 14 to 16, which contain water-soluble crosslinking agents.

The wet rubbing fastness and washing fastness of the aqueous inks of Examples 15 and 16 are lower than those of the aqueous ink of Example 14. It is considered that the carbodiimide equivalent (NCN equivalent) of the crosslinking agents contained in the aqueous inks of Examples 15 and 16 is greater than that of the crosslinking agent contained in the aqueous ink of Example 14. The NCN equivalent of the crosslinking agent in Example 14 is 335, that in Example 15 is 590, and that in Example 16 is 430. In other words, the crosslinking agents in Examples 15 and 16 have fewer crosslinking points than the crosslinking agent in Example 14. Therefore, in Examples 15 and 16, the number of crosslinking structures formed between binders is relatively small, making it difficult to obtain the effect of improving the strength of the resin coating film.

The aqueous ink of Example 17 has the same composition as the aqueous ink of Example 1 except that it contains a different crosslinking agent. Similar to Example 1, the aqueous ink of Example 17 contains an emulsion-type crosslinking agent. However, the wet rubbing fastness and washing fastness of the aqueous ink of Example 17 are lower than those of the aqueous ink of Example 1. The NCN equivalent of the crosslinking agent in Example 1 is 310, whereas that in Example 17 is 455. In other words, the crosslinking agent in Example 17 has fewer crosslinking points than the crosslinking agent in Example 1. Therefore, in Example 17, the number of crosslinking structures formed between binders is relatively small, making it difficult to obtain the effect of improving the strength of the resin coating film. From these results, it is found that an aqueous ink containing a crosslinking agent having an appropriate NCN equivalent exhibits better wet rubbing fastness and washing fastness.

The aqueous ink of Example 18 has the same composition as the aqueous ink of Example 1 except that it contains a different amine compound. The wet rubbing fastness and washing fastness of the aqueous ink of Example 18 are lower than those of the aqueous ink of Example 1. It is considered that the vapor pressure of the amine compound in Example 18 is lower than that of the amine compound in Example 1. The vapor pressure of the amine compound in Example 1 at 20 °C is 51.75 mmHg, whereas that of the amine compound in Example 18 at 20 °C is 0.01 mmHg. In other words, the amine compound in Example 18 is relatively less volatile. Accordingly, after the aqueous ink of Example 18 is applied to the fabric, the amine compound remains without volatilizing, making it difficult for the pH of the aqueous ink to decrease and for the crosslinking reaction to proceed favorably. Therefore, the number of crosslinking structures formed between binders is relatively small, making it difficult to obtain the effect of improving the strength of the resin coating film and to form a resin coating film that sufficiently covers the pigment. From these results, it is found that an aqueous ink containing an amine compound having an appropriate vapor pressure exhibits better wet rubbing fastness and washing fastness.

Example 19 shows lower storage stability compared to Example 1. The aqueous ink of Example 19 has the same composition as the aqueous ink of Example 1 except that it does not contain an amine compound. Since the aqueous ink of Example 19 does not contain an amine compound and the urethane resin has carboxyl groups, it exhibits weak acidity. Therefore, even during storage of the aqueous ink, the urethane resin can be crosslinked by the carbodiimide group-containing compound. As a result, the carboxyl groups of the urethane resin are consumed, and the pH increases, leading to a decrease in storage stability. From these results, it is found that an aqueous ink containing an amine compound exhibits better storage stability.

The aqueous ink of Example 20 has the same composition as the aqueous ink of Example 1 except that it contains pigments of different colors and amounts. From the evaluation results of Example 20, it is found that favorable results are obtained in all evaluation items regardless of the type and amount of pigment. Therefore, the technology disclosed in this specification can be applied to aqueous inks containing various pigments.

From the above results, it is found that an aqueous ink containing a binder including a urethane resin, a crosslinking agent including a carbodiimide group-containing compound, and an anionic wax particle exhibits favorable color development, high washing fastness and rubbing fastness, and favorable storage stability by appropriately setting the ratio of the amount of the crosslinking agent to the amount of the wax particles.

The specific examples have been described in detail above; however, these are merely illustrative and do not limit the scope of the claims. The technical scope described in the claims shall include various modifications and alterations of the specific examples illustrated above.

The technical elements described in this specification or the drawings may exhibit technical usefulness either individually or in various combinations, and are not limited to the combinations described in the claims at the time of filing. Furthermore, the technologies illustrated in this specification or drawings may achieve multiple objectives simultaneously, and achieving even one of these objectives may provide technical usefulness.

Even if each claim in the claims at the time of filing is dependent only on certain other claims, such dependency does not limit the claims to being dependent only on those specific claims. Within a technically consistent scope, each claim may be dependent on other claims not originally dependent upon. That is, the technologies of the respective claims may be combined in various ways as described below.

(Item 1) An aqueous ink for inkjet recording for forming an image on a fabric, comprising a pigment, a binder, a crosslinking agent, and a wax particle, wherein the binder comprises a urethane resin, the crosslinking agent comprises a carbodiimide group-containing compound, the wax particle is anionic, and a ratio of an amount of the crosslinking agent to an amount of the wax particle is 0.50 or greater and 3.00 or less.

(Item 2) The aqueous ink for inkjet recording according to Item 1, further comprising an amine compound.

(Item 3) The aqueous ink for inkjet recording according to Item 2, wherein a vapor pressure of the amine compound at 20 °C is 10 mmHg or greater and 100 mmHg or less.

(Item 4) The aqueous ink for inkjet recording according to any one of Items 1 to 3, wherein a ratio of an amount of the wax particle to an amount of the binder is 0.08 or greater.

(Item 5) The aqueous ink for inkjet recording according to any one of Items 1 to 4, wherein a ratio of an amount of the wax particle to an amount of the binder is 0.40 or less.

(Item 6) The aqueous ink for inkjet recording according to any one of Items 1 to 5, wherein a ratio of an amount of the crosslinking agent to a total amount of the binder, the crosslinking agent, and the wax particle is 0.08 or greater.

(Item 7) The aqueous ink for inkjet recording according to any one of Items 1 to 6, wherein a ratio of an amount of the crosslinking agent to a total amount of the binder, the crosslinking agent, and the wax particle is 0.26 or less.

(Item 8) The aqueous ink for inkjet recording according to any one of Items 1 to 7, wherein a carbodiimide equivalent of the carbodiimide group-containing compound is 300 or greater and 350 or less.

(Item 9) The aqueous ink for inkjet recording according to any one of Items 1 to 8, wherein the carbodiimide group-containing compound is in a form of emulsion.

(Item 10) An ink set comprising the aqueous ink for inkjet recording according to any one of Items 1 to 9, and a cationic pretreatment liquid to be applied to a fabric prior to forming an image on the fabric using the aqueous ink for inkjet recording.

(Item 11) An inkjet recording apparatus comprising an ink storage section, an ink ejection unit, and an aqueous ink for inkjet recording stored in the ink storage section, wherein the ink ejection unit is configured to eject the aqueous ink for inkjet recording to form an image on a fabric, the aqueous ink for inkjet recording comprises a pigment, a binder, a crosslinking agent, and a wax particle, wherein the binder comprises a urethane resin, the crosslinking agent comprises a carbodiimide group-containing compound, the wax particle is anionic, and a ratio of an amount of the crosslinking agent to an amount of the wax particle is 0.50 or greater and 3.00 or less.

(Item 12) An image forming method for forming an image on a fabric by an inkjet recording method, comprising a pretreatment step of applying a cationic pretreatment liquid to the fabric, wherein the pretreatment liquid is applied within an area where an image is to be formed using an aqueous ink for inkjet recording, an image forming step of forming an image on the pretreated fabric using the aqueous ink for inkjet recording, and a drying step of drying the aqueous ink for inkjet recording by heating the fabric on which the image has been formed, wherein the aqueous ink for inkjet recording comprises a pigment, a binder, a crosslinking agent, and a wax particle, wherein the binder comprises a urethane resin, the crosslinking agent comprises a carbodiimide group-containing compound, the wax particle is anionic, and a ratio of an amount of the crosslinking agent to an amount of the wax particle is 0.50 or greater and 3.00 or less.

While the invention has been described in conjunction with various example structures outlined above and illustrated in the figures, various alternatives, modifications, variations, improvements, and/or substantial equivalents, whether known or that may be presently unforeseen, may become apparent to those having at least ordinary skill in the art. Accordingly, the example embodiments of the disclosure, as set forth above, are intended to be illustrative of the invention, and not limiting the invention. Various changes may be made without departing from the spirit and scope of the disclosure. Therefore, the disclosure is intended to embrace all known or later developed alternatives, modifications, variations, improvements, and/or substantial equivalents.

## Claims

1. An aqueous ink for inkjet recording for forming an image on a fabric, comprising:
a pigment, a binder, a crosslinking agent, and a wax particle, wherein
the binder comprises a urethane resin,
the crosslinking agent comprises a carbodiimide group-containing compound,
the wax particle is anionic, and
a ratio of an amount of the crosslinking agent to an amount of the wax particle is 0.50 or greater and 3.00 or less.

2. The aqueous ink for inkjet recording according to claim 1, further comprising an amine compound.

3. The aqueous ink for inkjet recording according to claim 2, wherein a vapor pressure of the amine compound at 20 °C is 10 mmHg or greater and 100 mmHg or less.

4. The aqueous ink for inkjet recording according to any one of claims 1 to 3, wherein a ratio of an amount of the wax particle to an amount of the binder is 0.08 or greater.

5. The aqueous ink for inkjet recording according to any one of claims 1 to 4, wherein a ratio of an amount of the wax particle to an amount of the binder is 0.40 or less.

6. The aqueous ink for inkjet recording according to any one of claims 1 to 5, wherein a ratio of an amount of the crosslinking agent to a total amount of the binder, the crosslinking agent, and the wax particle is 0.08 or greater.

7. The aqueous ink for inkjet recording according to any one of claims 1 to 6, wherein a ratio of an amount of the crosslinking agent to a total amount of the binder, the crosslinking agent, and the wax particle is 0.26 or less.

8. The aqueous ink for inkjet recording according to any one of claims 1 to 7, wherein a carbodiimide equivalent of the carbodiimide group-containing compound is 300 or greater and 350 or less.

9. The aqueous ink for inkjet recording according to any one of claims 1 to 8, wherein the carbodiimide group-containing compound is in a form of emulsion.

10. An ink set comprising:
the aqueous ink for inkjet recording according to any one of claims 1 to 9, and
a cationic pretreatment liquid to be applied to a fabric prior to forming an image on the fabric using the aqueous ink for inkjet recording.

11. An inkjet recording apparatus comprising:
an ink storage section, an ink ejection unit, and an aqueous ink for inkjet recording stored in the ink storage section,
wherein
the ink ejection unit is configured to eject the aqueous ink for inkjet recording to form an image on a fabric, and
the aqueous ink for inkjet recording comprises:
a pigment, a binder, a crosslinking agent, and a wax particle, wherein
the binder comprises a urethane resin,
the crosslinking agent comprises a carbodiimide group-containing compound,
the wax particle is anionic, and
a ratio of an amount of the crosslinking agent to an amount of the wax particle is 0.50 or greater and 3.00 or less.

12. An image forming method for forming an image on a fabric by an inkjet recording method, comprising:
a pretreatment step of applying a cationic pretreatment liquid to the fabric, wherein the pretreatment liquid is applied within an area where an image is to be formed using an aqueous ink for inkjet recording,
an image forming step of forming an image on the pretreated fabric using the aqueous ink for inkjet recording, and
a drying step of drying the aqueous ink for inkjet recording by heating the fabric on which the image has been formed,
wherein the aqueous ink for inkjet recording comprises:
a pigment, a binder, a crosslinking agent, and a wax particle, wherein
the binder comprises a urethane resin,
the crosslinking agent comprises a carbodiimide group-containing compound,
the wax particle is anionic, and
a ratio of an amount of the crosslinking agent to an amount of the wax particle is 0.50 or greater and 3.00 or less.
